# EUROPÄISCHE PATENTANMELDUNG

(11) **EP 1 923 841 A2**
(43) Veröffentlichungstag der Anmeldung: **21.05.2008**
(21) Anmeldenummer: 07018778.6
(22) Anmeldetag: 25.09.2007
(51) Int. Cl.: G07B 15/00

(54) **Verfahren zum Kontrollieren eines mobilen Endgerätes**

(30) Priorität: 14.11.2006 DE 102006053842
(71) Anmelder: DB Vertrieb GmbH, 60326 Frankfurt (DE)
(72) Erfinder: Gemeinder, Marcus, Dr., 65551 Limburg (DE)
(74) Vertreter: Zinken-Sommer, Rainer

(57) **Zusammenfassung**

Die Erfindung betrifft ein Verfahren zum Kontrollieren eines mobilen Endgerätes, welches unter Nutzung einer Funkschnittstelle in ein zugangskontrolliertes System zum Bezug von Waren oder Dienstleistungen eingebucht werden kann und über eine Anwendung zum Dokumentieren und Abrechnen der aus diesem System bezogenen Leistungen verfügt, auf Vorliegen eines gültigen Einbuchungs-Status des mobilen Endgerätes in das zugangskontrollierte System mittels einer Kontroll-Chipkarte, wobei über die Funkschnittstelle eine Kommunikationsbeziehung zwischen der Kontroll-Chipkarte und dem mobilen Endgerät aufgebaut wird.

Die Erfindung soll im Hinblick auf den bekannten Stand der Technik sowohl eine höhere Prüf-Geschwindigkeit (= Anzahl kontrollierter Tickets je Zeiteinheit) als auch eine geringere Prüf-Fehlerrate (= Anzahl unerkannter gefälschter Tickets je Prüfmenge) ermöglichen.

Hierzu ist vorgesehen dass durch die Kontroll-Chipkarte eine Authentifizierung von der Anwendung auf dem mobilen Endgerät über die Funkschnittstelle abgerufen wird, in der Anwendung des mobilen Endgerätes vorliegende Einbuchungs-Datensätze auf Vorliegen eines gültigen Einbuchungs-Status geprüft werden sowie bei Vorliegen eines gültigen Einbuchungs-Status eine von der Kontroll-Chipkarte abrufbare Kontroll-ID auf einer Anzeigevorrichtung des mobilen Endgerätes ausgegeben wird.

## Beschreibung

Die Erfindung betrifft ein Verfahren zum Kontrollieren eines mobilen Endgerätes, welches unter Nutzung einer Funkschnittstelle in ein zugangskontrolliertes System zum Bezug von Waren oder Dienstleistungen eingebucht werden kann und über eine Anwendung zum Dokumentieren und Abrechnen der aus diesem System bezogenen Leistungen verfügt, auf Vorliegen eines gültigen Einbuchungs-Status des mobilen Endgerätes in das zugangskontrollierte System mittels einer Kontroll-Chipkarte, wobei über die Funkschnittstelle eine Kommunikationsbeziehung zwischen der Kontroll-Chipkarte und dem mobilen Endgerät aufgebaut wird.

Der zutrittskontrollierte Bezug von Dienstleistungen wird in zunehmendem Maße unter Nutzung elektronischer Medien abgewickelt. Erlaubnisscheine in Form von auf einem Papierträger gedruckten Eintrittskarten, Fahrkarten etc... werden immer häufiger von elektronischen Tickets abgelöst. Bei der technischen Realisierung derartiger e-Ticketing-Anwendungen wird üblicherweise zwischen Systemen zur Erfassung der Anwesenheit von Dienste-Nutzern in einem kostenpflichtigen Gebiet - sogenannte "Be In - Be Out - Systeme" (BiBo) - sowie Systemen zur Erfassung des Ein- und Austritts von Dienste-Nutzern in bzw. aus einem kostenpflichtigen Gebiet - sogenannte "Check In - Check Out - Systeme" (CiCo) - unterschieden.
Im Bereich des Verkehrswesens geht der Trend derzeit dahin, die bislang üblichen Papier-Fahrscheine abzulösen und durch elektronische Tickets zu ersetzen. Die Vorteile auf Seiten der leistungserbringenden Verkehrsunternehmen sind in erster Linie im Reduzieren des Aufwandes für Produktion und Logistik (Bevorratung, Verteilung etc.) der Papier-Tickets sowie des Aufwandes für das Handling von Bargeld zu sehen. Daneben wird angestrebt, die von den Kunden nachgefragten Verkehrs-Beziehungen ("von A nach B über C") mit weniger Aufwand und größerer Exaktheit als bisher erfassen zu können. Dies soll nicht nur einer verbesserten kommerziellen Bewertung der angebotenen Verkehrs-Dienstleistungen sondern auch einer Verbesserung bei der Prognose von Verkehrsströmen (d.h. einer Optimierung der angebotenen Transport-Kapazitäten in Bezug auf die nachgefragten Transport-Mengen) dienen. Auf Seiten der Kunden wird ein Mehrwert darin gesehen, dass ein elektronisches Ticketing erstmals die Möglichkeit einer "Best-Preis-Abrechnung" bietet. Insbesondere sporadischen Nutzern eines Verkehrssystems kommt dies entgegen, da diese sich nicht mit den Tarifierungs-Regularien auseinandersetzen müssen und ohne ein solches psychologisches Zugangs-Hemmnis das Verkehrssystem nutzen können.
In der Praxis tendiert man derzeit eher zu CiCo- als zu BiBo-Systemen. Dies ist zum einen darin begründet, dass die Vorgänge des aktiven Ein- und Aus-Checkens vielen Nutzern des öffentlichen Personennahverkehrs in Form von Bahnsteigsperren noch geläufig und logisch plausibel ist. Zum anderen ist dies aber auch darin begründet, dass die bei BiBo-Systemen erforderliche räumliche Erfassung insbesondere bei großflächigen und nachfrageintensiven Verkehrssystemen nach wie vor an technische Grenzen stößt.

Der aktuelle Stand der Technik bei elektronischen Tickets sieht den Einsatz von Smartcards vor, welche in personalisierter Form (mit nachgelagerter Abrechnung) oder anonymer Form (mit Vorausbezahlung von Wertguthaben) den Nutzern eines Verkehrssystems zugeordnet sind. Die Nutzer melden sich mittels dieser Smartcards sowohl beim Zugang als auch beim Verlassen eines Verkehrssystemes an bzw. ab. Hierfür sind spezielle Erfassungsgeräte vorgesehen (sog. "Smartcard-Reader"), welche entweder in Form von Sperren-Anlagen an den Haltestellen oder als einfache Erfassungsgeräte im Bereich der Zu- bzw. Abgangstüren der Verkehrsmittel angeordnet sind.

Des weiteren ist es aus dem Stand der Technik bekannt, die Smartcards nicht mehr länger als eigenständiges Trägermedium einzusetzen, sondern deren Funktionalität auf eine ohnehin allseits verfügbare Endgeräte-Plattform zu überführen: das Mobiltelefon. Damit werden die systemimmanenten Kosten (Produktion und logistische Vorhaltung der Smartcards) weiter gesenkt. Zugleich wird die Akzeptanz von elektronischen Ticket-Systemen erhöht, da das Mobiltelefon inzwischen zur Grundausstattung eines nahezu jeden Reisenden zählt. Dieser Ansatz wird dadurch gestärkt, dass inzwischen entsprechende Standards für die Kommunikation über Nah- bzw. Kurzstreckenfunkschnittstellen verfügbar sind (RFID, NFC). So sieht beispielsweise der Standard für NFC Übertragungsraten von bis zu 424 Kilobit pro Sekunde auf der Frequenz von 13.56 MHz vor. Da das beim elektronischen Ticketing auszutauschende Datenvolumen eher gering ist (es sind im wesentlichen nur An- und Abmelde-Datensätze zu übertragen), stellt dieser Standard eine robuste Ausgangsbasis dar.

Eine gewisse Problematik aller technischen Systeme beim elektronischen Ticketing ist in der grundsätzlichen Manipulierbarkeit elektronischer Daten zu sehen. Da es sich hierbei um eine Massen-Anwendung handelt, die nahezu jederzeit und überall verfügbar sein soll, können keine übermäßig großen Ansprüche an die beim Endkunden vorzuhaltende Hard- bzw. Software gestellt werden. Insbesondere können keine Systeme realisiert werden, bei denen Betrug durch Vorspiegeln eines in der Realität gar nicht existierenden elektronischen Tickets schon allein wegen der eingesetzten Hard- und Software als unmöglich vorauszusetzen wäre. Deshalb sind auch weiterhin Fahrschein-Kontrollen erforderlich. Üblicherweise kommen hierzu eigenständige Prüfgeräte zum Einsatz, bei denen Daten aus den Smartcards bzw. den Mobiltelefonen ausgelesen, verifiziert und als Berechtigungsdaten dem Prüfpersonal angezeigt werden. Es hat sich als nachteilig erwiesen, dass diese Prüfgeräte eine eigene Stromversorgung sowie Anzeige-Displays benötigen und damit in der Anschaffung teuer sind.

Der Erfindung liegt die Aufgabe zugrunde, ein Verfahren zum Kontrollieren eines mobilen Endgerätes auf Vorliegen eines gültigen Einbuchungs-Status bereitzustellen, welches gegenüber dem bekannten Stand der Technik im Hinblick auf die für einen großflächigen Einsatz von den Verkehrsunternehmen vorzuhaltende Hardware des Prüfpersonals technisch einfacher ausgeführt und damit kostengünstiger ist. Insbesondere soll die Erfindung im Hinblick auf den bekannten Stand der Technik sowohl eine höhere Prüf-Geschwindigkeit (= Anzahl kontrollierter Tickets je Zeiteinheit) als auch eine geringere Prüf-Fehlerrate (= Anzahl unerkannter gefälschter Tickets je Prüfmenge) ermöglichen.

Diese Aufgabe wird in Verbindung mit dem Oberbegriff des Patentanspruches 1 erfindungsgemäß dadurch gelöst,
- dass durch die Kontroll-Chipkarte eine Authentifizierung von der Anwendung auf dem mobilen Endgerät über die Funkschnittstelle abgerufen wird,
- in der Anwendung des mobilen Endgerätes vorliegende Einbuchungs-Datensätze auf Vorliegen eines gültigen Einbuchungs-Status geprüft werden
- sowie bei Vorliegen eines gültigen Einbuchungs-Status eine von der Kontroll-Chipkarte abrufbare Kontroll-ID auf einer Anzeigevorrichtung des mobilen Endgerätes ausgegeben wird.

Eine Ausführungsform der Erfindung sieht vor, dass die Prüfung auf Vorliegen eines gültigen Einbuchungs-Status in der Anwendung des mobilen Endgerätes durchgeführt wird, wobei die Kontroll-ID über die Funkschnittstelle von der Kontroll-Chipkarte an die Anwendung übertragen wird. Die Nutzer der mobilen Endgeräte könnten jedoch verleitet sein, die dort hinterlegte Anwendung mit dem Ziel zu manipulieren, stets einen gültigen Einbuchungs-Status vorzutäuschen.

In bevorzugter Weise wird das erfindungsgemäße Konzept deshalb realisiert, wenn die Prüfung auf Vorliegen eines gültigen Einbuchungs-Status von der Kontroll-Chipkarte durchgeführt wird, wobei die Einbuchungs-Datensätze von der Kontroll-Chipkarte über die Funkschnittstelle aus der Anwendung ausgelesen werden und in einem späteren Teilschritt die Kontroll-ID bei Vorliegen eines gültigen Einbuchungs-Status an das mobile Endgerät übertragen wird. Auf diese Weise ist das Verfahren unabhängig von eventuellen Manipulationen auf den mobilen Endgeräten.

Die Erfindung sieht auch bezüglich der Kontroll-ID unterschiedliche Ausführungsformen vor. Gemäß einer ersten Variante wird eine unveränderbar auf der Kontroll-Chipkarte abgespeicherte Kontroll-ID eingesetzt.
Alternativ hierzu ist es aber ebenso möglich, dass die Kontroll-ID von der Kontroll-Chipkarte zu Beginn eines jeden Kontroll-Vorganges neu erzeugt und mittels einer der Kontroll-Chipkarte zugeordneten Ausgabe-Vorrichtung angezeigt wird.

Gemäß einer sinnvollen Ausgestaltung wird von der Kontroll-Chipkarte eine Zufallszahl zur Authentifizierung des mobilen Endgerätes erzeugt und an die Anwendung übertragen wird, diese Zufallszahl sowohl von der Kontroll-Chipkarte als auch von der Anwendung mittels eines gemeinsamen Schlüssels kodiert sowie das Ergebnis der Kodierung auf Übereinstimmung überprüft wird.

Die Erfindung sieht ferner vor, dass die Kommunikation zwischen der Kontroll-Chipkarte und dem mobilen Endgerät unter Nutzung einer Nah- oder Kurzstrecken-Funkschnittstelle durchgeführt wird.

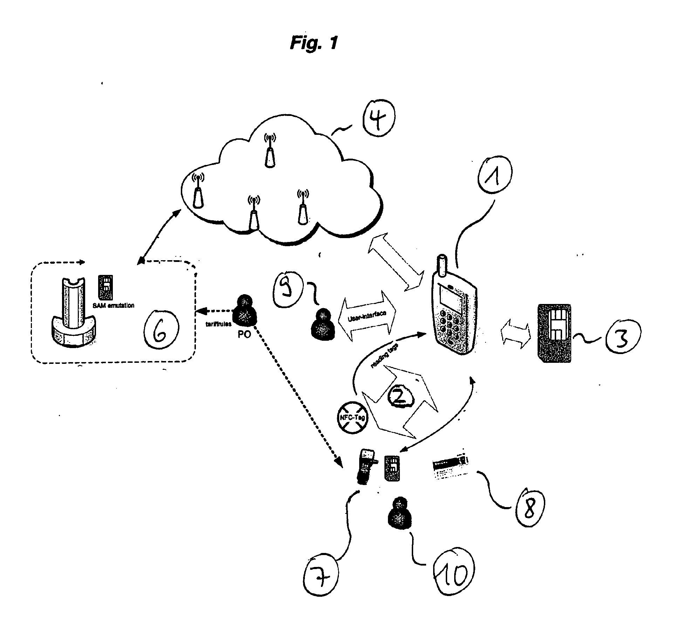

Der Erfindungsgedanke wird in nachfolgendem Ausführungsbeispiel anhand der Figur 1 erläutert. Die Figur 1 zeigt die Ausprägung einer technischen Architektur zur Durchführung des erfindungsgemäßen Verfahrens.

Ein Verkehrsunternehmen, das entgeltpflichtige Personentransport-Dienstleistungen erbringt, gibt an seine Kunden (9) tragbare Mobiltelefone (1) mit einer Nahfunkschnittstelle (2) nach ISO 14443 aus. Diese Mobiltelefone werden im Folgenden als NFC-Handies bezeichnet (wobei NFC = Near Field Communication). Ein solches NFC-Handy dient dem Kunden als Kundenmedium zur Erfassung und damit letztlich auch zur Abrechnung der in Anspruch genommenen Personentransporte. Auf der SIM-Karte (3) des NFC-Handys (1) befindet sich eine authentische Chipkartenapplikation für das "Check In-Check Out-Verfahren", die den durch den VDV (= Verband Deutscher Verkehrsunternehmen) festgeschriebenen Anforderungen der sog. VDV-Kernapplikation genügt. Diese Chipkarten-Applikation befindet sich entweder bereits bei Auslieferung des Handys bzw. der SIM-Karte inklusive aller erforderlichen Schlüssel / Zertifikate auf der SIM-Karte oder wird nachträglich über das Mobilfunknetz (4) über eine spezielle Schnittstelle des Mobilfunkproviders "over-the-air" aufgebracht, wobei dabei dann die entsprechenden Sicherheitslevel zu beachten sind.

Bei Fahrtantritt führt der Kunde einen Check-In durch. Hierzu aktiviert er den NFC-Modus seines Handys (1) und liest ein orts- bzw. fahrzeuggebundenes NFC-Tag (5) aus. Es kann sich hierbei beispielsweise um ortsfeste Buchungsstationen (sog. "Touchpoints") handeln, die auf den Bahnsteigen im Bereich des Zugangs zu den Zügen aufgestellt sind. Zum Durchführen des Check-In führt der Kunde sein aktiviertes NFC-Handy berührungslos in kurzer Entfernung an diesem Touchpoint vorbei, wodurch ein Datensatz erzeugt wird, der Ort und Zeit des Fahrtantrittes protokolliert. Hierzu triggert das NFC-Tag (5) den Start der Chipkarten-Applikation, woraufhin letztere über das Mobilfunknetz (4) eine Datenverbindung zu einem Server aufbaut (z.B. per HTTP über GPRS), und ein aus dem NFC-Tag ausgelesenes Identifikationsmerkmal des NFC-Tags an das Hintergrundsystem (6) überträgt. Diese Art der Datenübertragung unterscheidet das erfindungsgemäße Verfahren grundlegend von aus dem Stand der Technik bekannten Ansätzen wie z.B. in Hanau ("get>>in") bzw. Japan ("SuiCa"), bei denen auch NFC-Handys für CICO eingesetzt werden: Bei diesen bekannten Systemen ist eine aktive Terminalinfrastruktur vorhanden, die mit den Handys kommuniziert. Jedes Terminal besitzt eine eigene Anbindung an das Hintergrundsystem, d. h., es werden keinerlei Daten über das Mobilfunknetz übertragen. Die Handys nehmen dort lediglich die Rolle einer kontaktlosen Chipkarte ein.
Über die Mobilfunk-Datenverbindung kann nun unter Nutzung kryptographischer Verfahren - analog zu der aus dem Stand der Technik ebenfalls bekannten Verwendung von Chipkarten als Kundenmedium - ein Datensatz in der Chipkarten-Applikation abgelegt werden, der das Vorliegen eines gültigen Check-Ins belegt. Dieser Datensatz kann z.B. auch im Klartext eine Angabe über den Ort des Check-Ins (abgeleitet vom Identifikationsmerkmal des NFC-Tags) enthalten. Bei Verwendung der VDV-Kernapplikation befindet sich dieser Datensatz in einer sogenannten "AFB-Berechtigung" der Chipkarten-Applikation, wobei AFB für "automatische Fahrpreisberechnung" steht.

Der Check-Out (CO) erfolgt analog zum Check-In, wobei die AFB-Berechtigung auf den Status "ausgecheckt" zurückgesetzt wird, d.h., der Kunde darf die Verkehrsmittel bis zum nächsten Check-In nicht mehr nutzen (es sei denn, er hat einen zusätzlichen zweiten Fahrschein).

Zur Kontrolle von Fahrgästen, die mit einem derartigen Ticket-Trägermedium reisen, könnte nun dieser Datensatz nach dem bisher bekannten Stand der Technik mit einem Kontrollgerät (7) mit ISO 14443-Schnittstelle unter Verwendung eines SAMs (= Secure Application Module) ausgelesen werden. Derartige Geräte sind jedoch teuer in der Anschaffung und benötigen für den Kontrollvorgang ein gewisses Maß an Zeit, so dass hiermit zu Stoßzeiten in Massenverkehrsmitteln kaum effektiv kontrolliert werden kann.
Stattdessen kann unter Anwendung des erfindungsgemäßen Verfahrens eine Kontrollchipkarte (8) eingesetzt werden. Das Service-Personal (10), das mit der Durchführung der Kontrolle betraut ist, verfügt über eine Kontrollchipkarte (8), die beim Kontrollvorgang in Kontakt mit dem Ticket-Trägermedium (hier also: dem NFC-Handy) des Kunden (9) gebracht wird.
Der zu kontrollierende Kunde aktiviert wie beim Check-In den NFC-Modus seines Handys (1), welches ja als Ticket-Trägermedium fungiert. Die Kontrollchipkarte (8) triggert die (CICO-)Chipkartenapplikation auf der SIM-Karte (3), welche sich nun gegenüber der Kontrollchipkarte authentifiziert. Dazu kann beispielsweise ein Challenge-Response-Verfahren eingesetzt werden: Die Kontrollchipkarte sendet der Chipkartenapplikation eine Zufallszahl, welche die Chipkartenapplikation mit einem beiden Seiten bekannten Schlüssel verschlüsselt und an die Kontrollchipkarte zurück überträgt. Die Kontrollchipkarte ihrerseits dekodiert das Ergebnis. Ergibt sich dabei wieder die ursprüngliche Zufallszahl, so hat die Chipkartenapplikation den Nachweis der Kenntnis des geheimen Schlüssels erbracht.

### Ab dieser Stelle sind mindestens zwei Verfahrensabläufe denkbar:

### Kontrollablauf 1:

Die Kontrollchipkarte übermittelt der Chipkartenapplikation nun eine feste oder variable Kontroll-ID (wobei im Fall einer variablen ID eine Kontrollchipkarte mit einfachem Display eingesetzt werden müsste, auf der diese ID auch angezeigt werden könnte). Die Chipkartenapplikation prüft selbst, ob aktuell eine gültige Fahrtberechtigung vorliegt (Status "eingecheckt"; d. h., es ist zuvor ein Check-In oder Check-Through, aber kein Check-Out erfolgt). Nur wenn dies der Fall ist, zeigt die Chipkartenapplikation die übermittelte Kontroll-ID - gegebenenfalls zusammen mit dem Ort des (letzten) Check-In bzw. Check-Through - auf dem Display des Handys an (entweder über eine GUI-Applikation oder direkt, z.B. über SIM-Toolkit-Befehle).

### Kontrollablauf 2:

Die Kontrollchipkarte liest, z.B. bei Anwendung der Kernapplikation gemäß VDV, den in der AFB-Berechtigung abgelegten Datensatz durch kryptographische Verfahren (z.B. wie eine MAC-Bildung) gesichert aus und prüft selbsttätig das Vorliegen eines gültigen Check-In bzw. Check-Through (Überprüfung des Status "eingecheckt"). Nur wenn diese Überprüfung erfolgreich verläuft, wird eine Kontroll-ID von der Kontrollchipkarte an die Chipkartenapplikation übermittelt. Diese kann nun wie beim oben erläuterten Kontrollablauf 1 auf dem Display des Handys angezeigt werden.

Bei beiden Varianten ist entscheidend, dass die Chipkartenapplikation und die Kontrollchipkarte über Geheimschlüssel verfügen, die die Nutzung geeigneter kryptographischer Verfahren (Authentifizierung, MAC-Bildung etc.) zur Absicherung des Kontrollprozesses erlauben. Die Kontrollchipkarte übernimmt dabei gleichzeitig die Funktion, die ein SAM (= Secure Application Module) in einem aktiven Kontrollgerät hätte.

Bei beiden oben genannten Varianten des Kontrollablaufes wird auf diese Weise das Vorliegen einer Fahrtberechtigung (Status "eingecheckt") durch Anzeige einer Kontroll-ID auf dem Display des Kunden-Handys bestätigt, ohne dass der Status auf der Kontrollchipkarte angezeigt werden muss.
Es ist in diesem Zusammenhang noch zu erwähnen, dass die Kontrollchipkarte stets vom Handy mit Energie versorgt wird; eine Batterie oder ähnliches sind deshalb nicht erforderlich.

### Bezugszeichenliste:

- 1: NFC-Handy
- 2: Nahfunk-Schnittstelle
- 3: SIM-Karte des NFC-Handys
- 4: Mobilfunknetz
- 5: NFC-Tag
- 6: Hintergrundsystem
- 7: Kontrollgerät (gemäß bekanntem Stand der Technik)
- 8: Kontrollchipkarte (gemäß Erfindung)
- 9: Kunde bzw. Fahrgast
- 10: Servicepersonal

## Patentansprüche

1. Verfahren zum Kontrollieren eines mobilen Endgerätes, welches unter Nutzung einer Funkschnittstelle in ein zugangskontrolliertes System zum Bezug von Waren oder Dienstleistungen eingebucht werden kann und über eine Anwendung zum Dokumentieren und Abrechnen der aus diesem System bezogenen Leistungen verfügt, auf Vorliegen eines gültigen Einbuchungs-Status des mobilen Endgerätes in das zugangskontrollierte System mittels einer Kontroll-Chipkarte, wobei über die Funkschnittstelle eine Kommunikationsbeziehung zwischen der Kontroll-Chipkarte und dem mobilen Endgerät aufgebaut wird,
**dadurch gekennzeichnet,**
• **dass** durch die Kontroll-Chipkarte eine Authentifizierung von der Anwendung auf dem mobilen Endgerät über die Funkschnittstelle abgerufen wird,
• in der Anwendung des mobilen Endgerätes vorliegende Einbuchungs-Datensätze auf Vorliegen eines gültigen Einbuchungs-Status geprüft werden
• sowie bei Vorliegen eines gültigen Einbuchungs-Status eine von der Kontroll-Chipkarte abrufbare Kontroll-ID auf einer Anzeigevorrichtung des mobilen Endgerätes ausgegeben wird.

2. Verfahren zum Kontrollieren eines mobilen Endgerätes nach Anspruch 1, **dadurch gekennzeichnet, dass** die Prüfung auf Vorliegen eines gültigen Einbuchungs-Status in der Anwendung des mobilen Endgerätes durchgeführt wird, wobei die Kontroll-ID über die Funkschnittstelle von der Kontroll-Chipkarte an die Anwendung übertragen wird.

3. Verfahren zum Kontrollieren eines mobilen Endgerätes nach Anspruch 1, **dadurch gekennzeichnet, dass** die Prüfung auf Vorliegen eines gültigen Einbuchungs-Status von der Kontroll-Chipkarte durchgeführt wird, wobei die Einbuchungs-Datensätze von der Kontroll-Chipkarte über die Funkschnittstelle aus der Anwendung ausgelesen werden und die Kontroll-ID bei Vorliegen eines gültigen Einbuchungs-Status an das mobile Endgerät übertragen wird.

4. Verfahren zum Kontrollieren mobiler Endgeräte nach mindestens einem der Ansprüche 1 bis 3, **dadurch gekennzeichnet, dass** eine unveränderbar auf der Kontroll-Chipkarte abgespeicherte Kontroll-ID eingesetzt wird.

5. Verfahren zum Kontrollieren mobiler Endgeräte nach mindestens einem der Ansprüche 1 bis 3, **dadurch gekennzeichnet, dass** die Kontroll-ID von der Kontroll-Chipkarte zu Beginn eines jeden Kontroll-Vorganges neu erzeugt und mittels einer der Kontroll-Chipkarte zugeordneten Ausgabe-Vorrichtung angezeigt wird.

6. Verfahren zum Kontrollieren mobiler Endgeräte nach mindestens einem der Ansprüche 1 bis 5, **dadurch gekennzeichnet, dass** von der Kontroll-Chipkarte eine Zufallszahl zur Authentifizierung des mobilen Endgerätes erzeugt und an die Anwendung auf dem mobilen Endgerät übertragen wird, diese Zufallszahl sowohl von der Kontroll-Chipkarte als auch von der Anwendung mittels eines gemeinsamen Schlüssels kodiert wird sowie das Ergebnis der Kodierung auf Übereinstimmung überprüft wird.

7. Verfahren zum Kontrollieren mobiler Endgeräte nach mindestens einem der Ansprüche 1 bis 6, **dadurch gekennzeichnet, dass** die Kommunikation zwischen der Kontroll-Chipkarte und dem mobilen Endgerät unter Nutzung einer Nah- oder Kurzstrecken-Funkschnittstelle durchgeführt wird.
